(19) Europäisches Patentamt
European Patent Office
Office européen des brevets

(11) **EP 3 154 046 B1**

(12) **EUROPEAN PATENT SPECIFICATION**

(45) Date of publication and mention
of the grant of the patent:
**08.12.2021 Bulletin 2021/49**

(51) Int Cl.:
***G08G 5/00*** *(2006.01)*      ***G01S 5/00*** *(2006.01)*
***G01S 5/06*** *(2006.01)*

(21) Application number: **15382485.9**

(22) Date of filing: **05.10.2015**

(54) **SYSTEM AND METHOD FOR VERIFYING ADS-B MESSAGES**

SYSTEM UND VERFAHREN ZUR VERIFIZIERUNG VON ADS-B-NACHRICHTEN

SYSTÈME ET PROCÉDÉ DE VÉRIFICATION DE MESSAGES ADS-B

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**12.04.2017 Bulletin 2017/15**

(73) Proprietor: **The Boeing Company**
**Chicago, IL 60606-1596 (US)**

(72) Inventors:
• **TABOSO BALLESTEROS, Pedro**
**28042 Madrid (ES)**

• **RODRIGUEZ MONTEJANO, Rosa Maria**
**28042 Madrid (ES)**
• **CANO SERRANO, Florencio**
**28042 Madrid (ES)**

(74) Representative: **Clarke Modet & Co.**
**C/ Suero de Quiñones 34-36**
**28002 Madrid (ES)**

(56) References cited:
**EP-B1- 3 088 911       US-A1- 2011 057 830**
**US-A1- 2012 041 620**

**Description**

FIELD OF THE DISCLOSURE

The present system and method lie on the field of the security transmission of information between aircraft. In detail, the present system and process provide readable tools against ADS-B (Automatic Dependent Surveillance - Broadcast) spoofing. Therefore, the system and method described herein provide spoof detection.

BACKGROUND

Automatic Dependent Surveillance Broadcast system (ADS-B) is a source of surveillance for airborne aircraft. ADS-B systems broadcast information without any security measure like authentication or ciphering. Therefore, it is easy for an attacker to reproduce false ADS-B messages ("spoofing") providing false aircraft position, aircraft velocity, aircraft ID or any other ADS-B data.

A solution is provided in the U.S. Pat. Appl. No. 20120041620 A1, which discloses how an intruder bearing can be calculated based on the parameters from the TCAS system (Traffic alert and Collision Avoidance System) and from the ADS-B system. Therefore, the provided solution depends on the accuracy of the signals emitted and received by the antenna of the TCAS system. Consequently, the provided solution is dependent on the signals reflections or blockages.

The document US2011/057830 discloses a system and method for validating aircraft traffic control data, and more specifically to a system and method for verification and validation of ADS-B data on aircraft based on multilateration, wherein at least four neighbouring aircraft share the times they received the ADS-B signal from an aircraft P, to determine the position of P via multilateration.

The present disclosure provides a solution that overcomes the above mentioned drawbacks.

SUMMARY

A first aspect of is to provide a system for verifying ADS-B messages. An aircraft is continuously receiving ADS-B messages from the aircraft that are flying around the former. Therefore a system for verifying the ADS-B messages is necessary to be provided. Accordingly, the present invention provides a system for verifying ADS-B messages for an aircraft provided with Automatic Dependent Surveillance - Broadcast systems "ADS-B" comprising a Mode S transponder according to claim 1.

In one embodiment, the receiver module comprises an ADS-B detector, a request detector and a response detector. The ADS-B detector is configured to identify ADS-B messages. The request detector is configured to identify request messages. Finally, the response detector is configured to identify response messages.

In one or more embodiments, the processor module comprises a table, a brain and a clock. The table consisting of a memory for storing the information to be provided to the brain. The clock provides the time reference for the system according to the Global Navigation Satellite System (GNSS). The brain may include a processor configured to: i) store in the table the information contained in a ADS-B message. The information being at least: an aircraft ID; an aircraft position for said aircraft ID; and, a time of arrival for said aircraft ID; ii) perform telemetry calculations; iii) compare the results of the telemetry calculations with the aircraft position contained in the ADS-B message; and, iv) determine when to send the request message and the response message.

In one or more embodiments, the transmitter module comprises: a request transmitter and a response transmitter, to format the request message and the response message, respectively.

In a second aspect of the present invention a method is provided for verifying ADS-B messages for an aircraft provided with Automatic Dependent Surveillance - Broadcast systems "ADS-B" according to claim 5.

In one or more embodiments, the step (or sub-process) of gathering ADS-B message information further comprises: i) processing ADS-B messages received during the periodic time window; ii) incrementing the value of the time window counter; iii) starting timestamp counter; iv) determining the timestamp when an ADS-B message is received; v) extracting both the aircraft address and the ADS-B position claimed; vi) recording the aircraft address and the ADS-B position claimed into the table; vii) continuing listening and processing the received ADS-B messages if the periodic time window is still open; otherwise, viii) stopping processing ADS-B messages until the next periodic time window.

In one or more embodiments, the step (or sub-process) of broadcasting a request message further comprises: i) checking the table in order to determine if there are any nodes to be verified; a node is considered verified when the position claimed by ADS-B matches the position calculated by multilateration. If a node needs to be verified, the system may require data from the surrounding aircraft (nodes) in order to perform multilateration calculations. In order to request the data needed, the above mentioned step (or sub-process) of broadcasting a request message further comprises: ii) generating a request message; iii) determining a random time delay; iv) waiting the random time delay; this delay is meant to establish a stand-by period wherein the system is not required to transmit any request, but rather listen to the 1030 MHz channel in order to detect any requests sent by other nodes of the group; v) if a request is received during the random time delay, the system discards the own request message and the sub-process ends; vi) if no request is received during the random time delay, the system broadcasts its own request message. This message will be received by the rest of the nodes of the group (aircraft within the ADS-B range) and the broadcasting response message sub-process shall be triggered. Once the request message has been broadcasted the broadcasting of request message step (or sub-process) ends.

In one or more embodiments, the step (or sub-process) of broadcasting a response message further comprises: i) continuously listening to detect any requests sent by other nodes. The listening is typically done at the 1030 MHz channel. When a request is detected, the system broadcasts the information of its own table that may be useful for other nodes to perform calculations. In order to make efficient use of the transmission channel to a great extent, the process of the present disclosure defines a transmission procedure based on the assignment of transmission time slots. Each of the nodes determines its own transmission time slot. The sub-process of broadcasting a response message further comprises: ii) sorting its own table by the aircraft address. The node with the lowest Aircraft Address "AA" shall be considered the first in the list of nodes of the group; iii) self-assignment of a transmission time slot. The time slot self-assigned by the system onboard corresponds to its own position in the list. Once the system knows its transmission time slot, the sub-process of broadcasting a response message further comprises: iv) generating a response message; v) determining a random time delay; vi) checking whether the time slot is expired. Each of the messages includes information regarding the timestamp of a single ADS-B received message. The message is transmitted during the transmission time slot determined before. The exact instant to transmit the message is determined by a random time delay. The function of this random time delay is to reduce the probability of transmission collisions in case two or more nodes have chosen the same transmission time slot; vii) waiting for the expiration of the random time delay; viii) broadcasting the response message including data of a single row of the table; ix) repeating steps iv) through viii) as many times as necessary until the information about each node in the table has been transmitted; and, x) ending the step (or sub-process) when the table is completely transmitted.

In one or more embodiments, the step (or sub-process) of performing telemetry calculations (meaning the same as multilateration calculations) further comprises: i) continuously listening for possible responses received from other nodes of the group; ii) extracting at least the Aircraft Address "AA" and the timestamp when a response message is received; iii) recording extracted aircraft address and timestamp in the table; iv) checking if there is enough information to perform Multilateration "MLAT" calculations to verify the position of the node; v) if the information available is not enough to verify a node, the system continues to wait for new response messages. Steps i) to iv) are then repeated; vi) if there is enough information, the system performs MLAT calculations.

The system then compares the telemetry results with the position claimed by ADS-B messages and determines if a concrete node is reliable or not; vii) finally, the results are represented so the flight crew is aware of the situation in real time.

A third aspect of the present invention is to provide a computer readable medium having stored therein a computer program that when loaded onto an aircraft, configures the Automatic Dependent Surveillance - Broadcast systems "ADS-B" so that the ADS-B system is able to further verify ADS-B messages according to the method of claim 5.

A aspect of the present invention is to provide an aircraft that includes a system for verifying ADS-B messages received from aircraft within its ADS-B range, according to claim 1.

In one or more embodiments, the receiver module provided in the aircraft comprises: an ADS-B detector, a request detector and a response detector. The ADS-B detector is configured to identify ADS-B messages. The request detector is configured to identify request messages. And, the response detector is configured to identify response messages.

In one or more embodiments, the processor module provided in the aircraft comprises: a table, a brain and a clock. The table consisting of a memory for storing the information to be provided to the brain; the clock providing a time reference for the system according to the Global Navigation Satellite System; and, the brain consisting of a processor configured to:

- store in the table the information contained in a ADS-B message being at least: an aircraft ID; an aircraft position for said aircraft ID; and a time of arrival for said aircraft ID;
- perform telemetry calculations;
- compare the results of the telemetry calculations with the aircraft position contained in the ADS-B message; and determine when to send the request message and the response message.

As used herein, a system, apparatus, structure, article, element, component, or hardware configured to perform a specified function is indeed capable of performing the specified function without any alteration, rather than merely having potential to perform the specified function after further modification. In other words, the system, apparatus, structure, article, element, component, or hardware configured to perform a specified function is specifically selected, created, implemented, utilized, programmed, and/or designed for the purpose of performing the specified function. As used herein, "configured to" denotes existing characteristics of a system, apparatus, structure, article, element, component, or hardware which enable the system, apparatus, structure, article, element, component, or hardware to perform the specified function without further modification. For purposes of this disclosure, a system, apparatus, structure, article, element, component, or hardware described as being configured to perform a particular function may additionally or alternatively be described as being adapted to and/or as being operative to perform that function.

## BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will be best understood by reference to the following detailed description of an illustrative embodiment of the present disclosure when read in conjunction with the accompanying drawings, wherein:

> **Figure 1** illustrates an exemplary flight situation where an aircraft A is surrounded by aircraft within and without the ADS-B range of the aircraft A.
> **Figure 2** illustrates an exemplary system for verifying ADS-B messages.
> **Figure 3** illustrates an exemplary table included in the system for verifying ADS-B messages.
> **Figure 4** includes a flow chart description of an exemplary process for verifying ADS-B messages.
> **Figure 5** includes a flow chart description of an exemplary sub-process for gathering ADS-B messages information.
> **Figure 6** includes a flow chart description of an exemplary sub-process for broadcasting request messages.

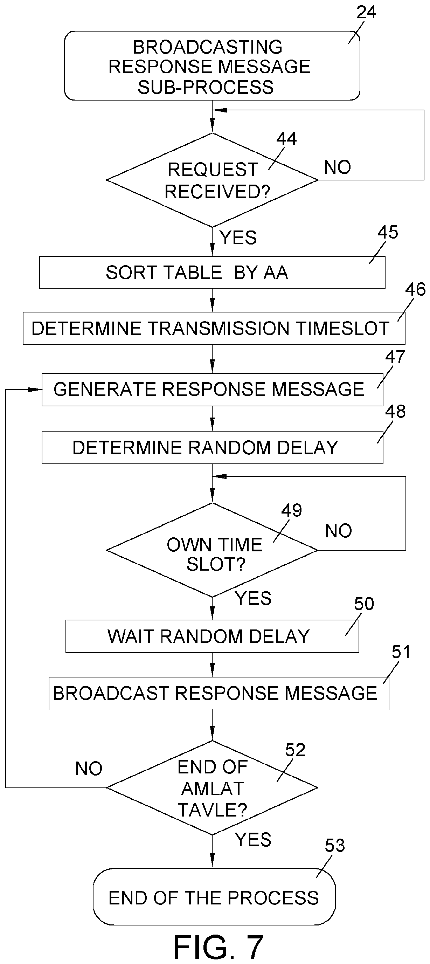

> **Figure 7** includes a flow chart description of an exemplary sub-process for broadcasting response message.
> **Figure 8** includes a flow chart description of an exemplary sub-process for performing telemetry calculations.

## DETAILED DESCRIPTION

In the following description, "node" is used as a synonym of "aircraft" because both have the same meaning within the field of the present disclosure. Additionally method and process may be used interchangeably herein where the method contains sub-processes.

The present disclosure describes embodiments of the system and method for verifying ADS-B (Automatic Dependent Surveillance - Broadcast) messages interchanged among several nodes. The disclosed verification system and method are effective against attackers which use ADS-B messages as a supporting platform for carrying out their attacks. Advantageously, the disclosed verification system and method are focused on the ADS-B messages received at the aircraft. Consequently, it represents an advance over those security inventions of the prior art that use encryption techniques.

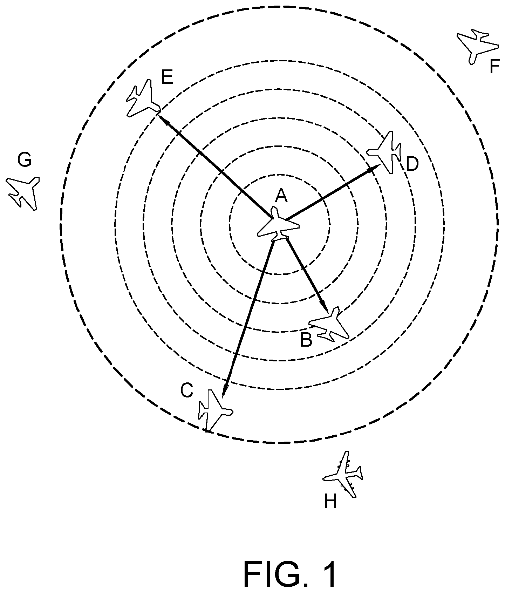

It is shown in **FIG. 1** an aircraft **A** and seven surrounding aircraft **B** to **H,** all of them provided with Automatic Dependent Surveillance - Broadcast systems "ADS-B" and Mode S transponders. Aircraft **A** wants to verify the ADS-B messages received from the nodes within its ADS-B range, i.e., those messages received from Aircraft **B** to **E.**

In order to do the above, Aircraft **A** and all the aircraft within the ADS-B range of the Aircraft **A** have to be provided with the system and method of the disclosure. The system **1** for verifying ADS-B messages including a receiver module **2,** a processor module **3,** a transmitter module **4** and a database **8.** The system **1** is connected to the GNSS system **6,** to the Mode S transponder **5** and to the ADS-B system **7.** The system can be customized so that only those verified ADS-B messages are sent to the ADS-B system **7,** or all the ADS-B messages are sent to the ADS-B system **7** but each of them labeled as truthful or untruthful for the flight's crew information. The information is shown to the flight's crew by means of a visual representation in a screen **9.**

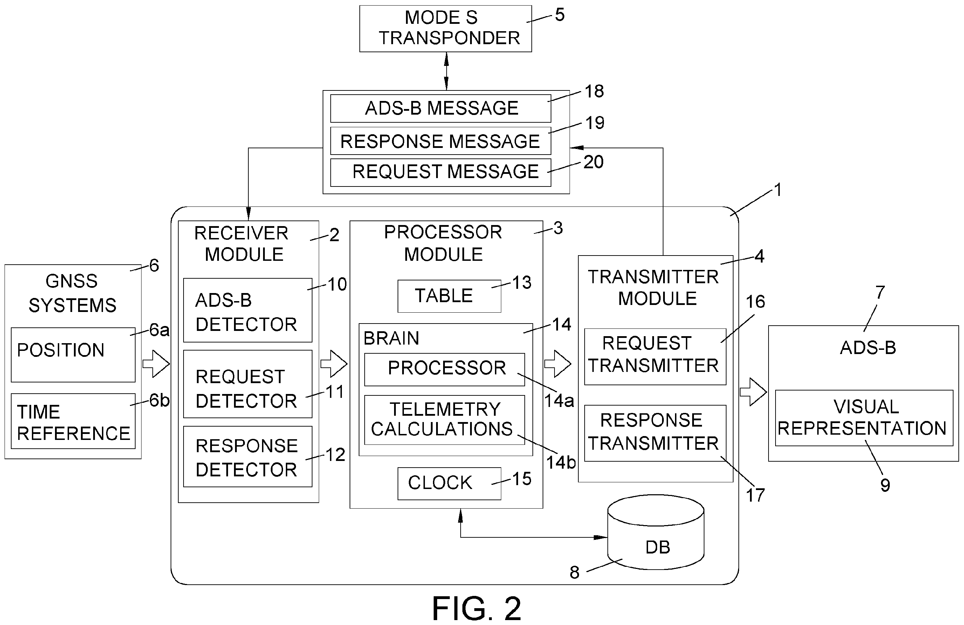

The GNSS system **6** provides, for the exemplary embodiment shown in **FIG. 2,** the aircraft **A** position and a time reference for aircraft **A** which is also the same time reference for all the nodes **B** to **H.** The Mode S transponder **5** provides the received messages from the surrounding nodes **B** to **H** to the system **1** and also broadcasts the messages from the system **1** to the surrounding nodes **B** to **H.**

The receiver module **2** is a processor configured to demodulate and decode the signals received from the Mode S transponder **5.** The system **1** of the present disclosure uses three types of messages: the ADS-B messages **18** commonly used by the ADS-B systems, the request messages **20** and the response messages **19.** Consequently, the system **1** is also configured to determine the type of message received and then to extract and parse the information contained in each kind of message. In order to process each kind of message, the receiver module **2** may include the ADS-B detector **10** configured to identify the ADS-B messages **18,** the request detector **11** configured to identify the request messages **20** and the response detector **12** configured to identify the response messages **19.**

The processor module **3** may include several sub-modules **13-15,** each one of them configured to process the information extracted and parsed by the receiver module. The processor module **3** may include the table **13,** the brain **14** and the clock **15.** The clock **15** provides the time reference to the system **1** and it is synchronized with the time provided by the GNSS system **6.** The brain **14** is a processor **14a** in charge of determining whether the ADS-B data received is truthful or not. The brain **14** receives information (aircraft ID, aircraft position, time of arrival TOA) from the receiver module **2,** places it in the table **13,** performs telemetry calculations **14b,** compares the results with the ADS-B position claimed (aircraft position within the ADS-B message), and determines when to send a request message or a response message. With the method described herein, the system is able to determine whether the information provided is enough to perform telemetry calculations and also whether the request messages or the response messages have to be sent. If the information provided is enough to perform telemetry calculations, the processor **14a** performs the telemetry calculations **14b** and compares the telemetry calculations with the position **6a** of the aircraft contained ADS-B message being the ADS-B message truthful if both match. If the information provided is not enough to perform telemetry calculations, the request message from the node **A** is sent to the nodes **B** to **E** within ADS-B range. The nodes **B** to **E** respond to node A with response messages. The database is connected to the processor module **3** for storing the information needed by the processor module **3** and data to perform telemetry calculations. The telemetry calculations are based on Multilateration (MLAT).

The multilateration (MLAT) can be defined as a cooperative surveillance application that accurately establishes the position of transmitters. MLAT uses data from an aircraft that can be transmitted in response to different technologies such as Mode S or ADS-B. The transmitted signal by an aircraft will be received by each of the nodes at fractionally different times. Using advanced computer processing techniques, these individual time differences allow an aircraft's position to be accurately calculated. The basic idea in multilateration is to have at least "n" equations to estimate "n" variables. Considering an emitter (Aircraft A in Figure 1) at an unknown location vector ($x,y,z$) and that the source is within range of N receivers at known locations (aircraft B to E), the distance ($d_i$) from the emitter to one of the receivers is:

$$d_i = \sqrt{(x_i - x)^2 + (y_i - y)^2 + (z_i - z)^2}$$

The TDOA equation for receivers $i$ and $m$ is:

$$TDOA_{i-m} = TOA_i - TOA_m$$

Considering the light speed (c), there is a direct relation between previous equations:

$$c \cdot TDOA_{i-m} = d_i - d_m$$

being:

- TDOA the Time-Difference of Arrival.
- $x_i$, $y_i$ and $z_z$ is the position of each receiver (aircraft as receiver stations);
- $x$, $y$ and $z$ is the position of the emitter aircraft.

Thus, in order to accurately establish the position of the emitter, at least four receivers may be needed.

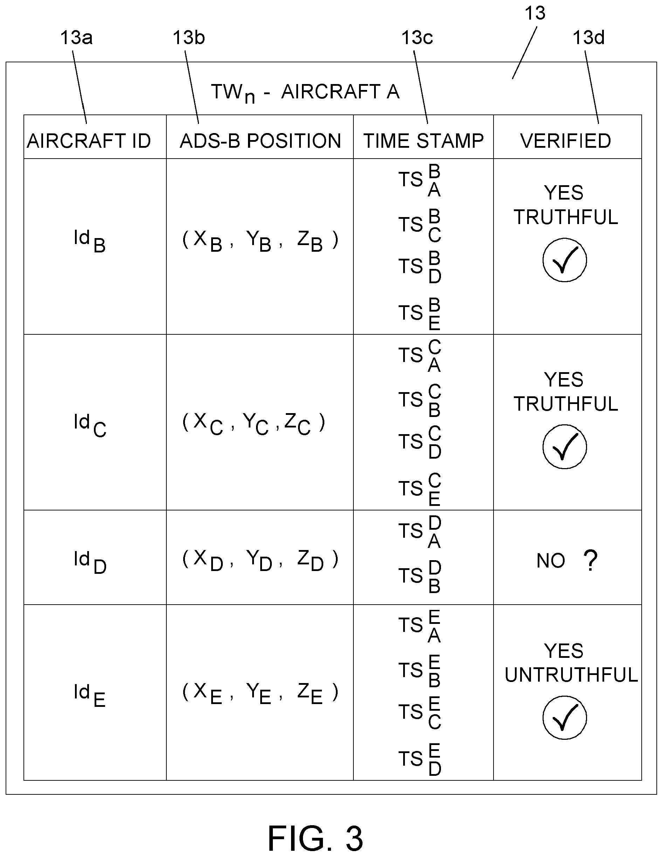

An exemplary embodiment of the table **13** is shown in **FIG.3.** The system 1 only processes ADS-B messages during determined time slots labeled as $TW_1$, $TW_2$,..., $TW_n$ and named as Time Window Identifier (TW Identifier). The first column **13a** of the table **13** is for the Aircraft ID, which is a 24-bit field for each aircraft address of every ADS-B message extracted and stored. The second column **13b** of the table **13** is for Aircraft position contained in each ADS-B message. The third column **13c** of the table **13** is for the timestamp $TS_x^Y$, i.e. the time of arrival registered by Aircraft X regarding an ADS-B message sent by Aircraft Y. Therefore, the first value is the "own" timestamp (FIG. 3, $TS_A^B$, the exact instant when the Aircraft A receives the ADS-B message from Aircraft B) and the rest of the values are "external" timestamps since they are those timestamps registered by other nodes (Aircraft B to E), as a consequence of a request message, i.e. Aircraft A broadcasts a request message and Aircraft B to E respond with response messages. The timestamp is referred to as the beginning of a concrete $TW_i$. The fourth column **13d** of the table **13** is for the verified status. The verified status provides two types of information: whether or not (FIG. 3, YES/NO) there is enough information for performing the telemetry calculations, and whether the ADS-B message is Truthful or Untruthful. Thus, for the exemplary embodiment of table **13** shown in **FIG. 3** according to the situation shown in **FIG. 1,** the table **13** is the table for the Aircraft A in a time window $TW_n$, having enough information for performing telemetry calculations for the nodes B, C and E, and not having enough information for performing telemetry calculations for the node D. Among those nodes having enough information for performing telemetry calculations, nodes B and C are considered as truthful since their ADS-B claimed positions match with the telemetry calculations, and node E is considered as untruthful since its ADS-B claimed position does not match with the telemetry calculations for the Aircraft E.

The transmitter module **4** is configured to format the request message and the response message for sending the request messages and the response messages to the Mode S transponder **5**. The Mode S transponder **5** of the node A broadcasts signals containing request messages to the nodes within the ADS-B range of the Aircraft **A,** i.e. nodes **B,C,D, E** (see FIG. 1).

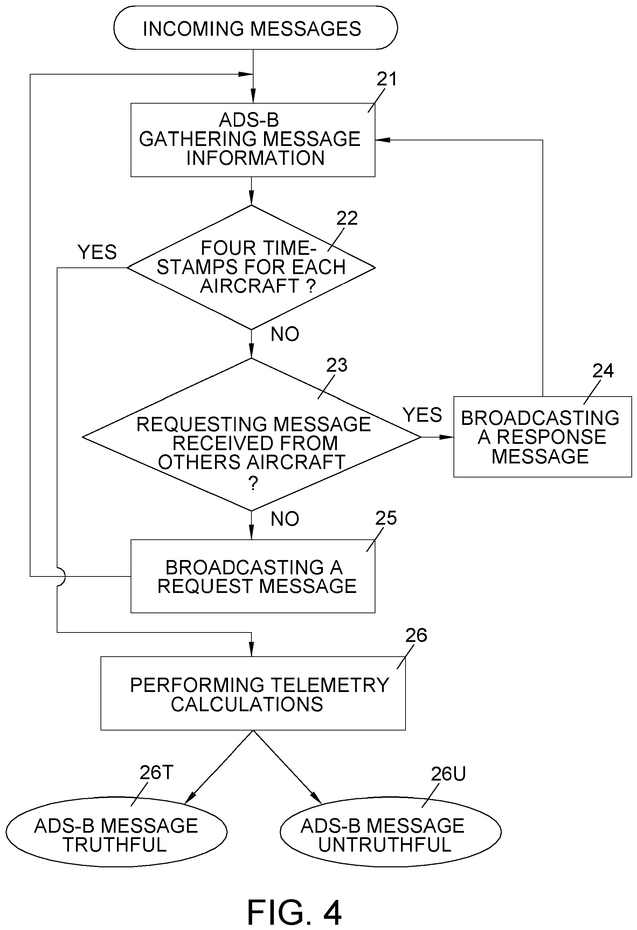

The system performs a process that can be summarized as shown in **FIG.4.** The system (installed in aircraft A for the exemplary embodiment shown in FIG. 1) firstly gathers ADS-B message information **21** from the nodes within ADS-B range (aircraft B to E for the exemplary embodiment shown in FIG. 1). This gathering process is typically done for a periodic time window. The ADS-B messages are those received by a node (FIG.1, aircraft A) from the nodes within the ADS-B range (FIG. 1, aircraft B to E). The information contained in the ADS-B message is at least the aircraft ID of the sender node (FIG. 1, aircraft B to E), the position of the sender node and the time of arrival of the sender node. The receiver node (FIG.1, aircraft A) adds the timestamp to each received message which is also stored in the table. The information extracted from the ADS-B messages is used to map the group of nodes (surrounding aircraft within ADS-B range as shown in FIG. 1). The information received via ADS-B shall be considered untrustworthy by default. Then, the system checks whether or not the nodes within ADS-B range (FIG. 1, aircraft B to E) can be verified **22.** In order to verify the node, the system applies multilateration "MLAT" calculations (telemetry calculations) to the information contained in the ADS-B messages. It is key for applying telemetry calculations to be provided with at least four timestamps **22** per each node to be verified. In case the system needs additional information to perform telemetry calculations, the system broadcasts request message **25** to the nodes within the ADS-B range. As a security measure, the system awaits a time (a random time delay) before broadcasting the request messages to ensure that no other request message from other nodes is received **23.** Then, the system (FIG. 1, aircraft A) receives the response messages of the nodes within the ADS-B range (FIG. 1, aircraft B to E). The response messages contain the table of each node. Then, the system checks whether or not the information contained in the received messages is enough to perform telemetry calculations **26.** In a positive case, the system is able to determine whether the ADS-B message is truthful **26T** or untruthful **26U.** The ADS-B message is truthful when the performed telemetry calculations turns out a position for the aircraft that matches with the position contained in the ADS-B message. In a negative case, the system reverts to the step in which the request messages are broadcasting.

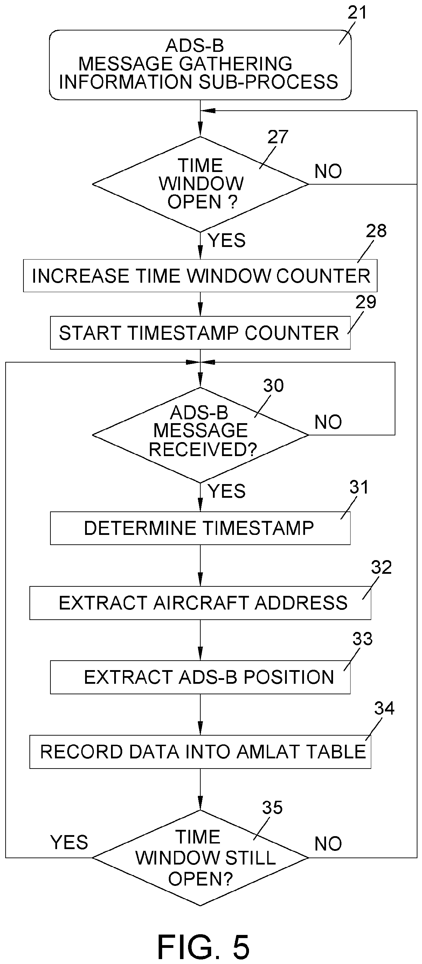

The above mentioned gathering sub-process of ADS-B message information **21** is shown in detail in FIG. 5. With this gathering sub-process, the system is able to determine the nodes of the group to be verified. The ADS-B message gathering sub-process may be described as follows. Firstly, the system 1 is initialized (automatic or at flight crew's discretion) after the ADS-B - IN systems (ATSAW, ASAS...) have been started. Then, the system shall be provided with the ADS-B position messages received by the own aircraft. The system shall only process those ADS-B messages received during determined Time Windows, i.e. the system is only "listening" for short periods of time. These periods of time are shown in FIG. 5 as "time window open?" **27.** Thus, these Time Windows are called "Time Window Listener" (TWL). Time Window Listeners (TWLs) are periodic. Time Window Listeners are synchronized regardless of the system. TWLs are triggered at the first second of every minute, and are repeated with a period of ten seconds. TWLs allow the system to receive and process at least one ADS-B message of each of the surrounding aircraft. Then, every TWL is identified by the system which comprises a 6-bit counter. The 6-bit counter is incremented **28** with every new TWL and reset after reaching the value 59. This counter is used to identify the TWL during a period of 10 minutes (60 possible values, 0-59). The first TWL ("start timestamp counter **29"**) of each hour is assigned the value of zero. The same value is assigned to the TWL that starts 10 minutes later, twenty minutes later and so on. This way of carrying out the synchronization ensures that each system in a group has the same TWL reference. The system also comprises an internal counter for every TWL which it is used to determine the exact moment of the TWL when an ADS-B message is received. When an ADS-B message is received **30,** the system determines its timestamp **31.** The timestamp consists of the TWL number ($TW_1$,..., $TW_n$) and the value of the TWL internal counter. The message is then used by the system to extract both the 24-bit aircraft address **32,** and the ADS-B position claimed **33.** These data are recorded into the table **34.** Then, if the TWL is still open **35,** the system continues listening and processing the received ADS-B messages. On the other hand, if the TWL is over, the system stops processing ADS-B messages until the next TWL.

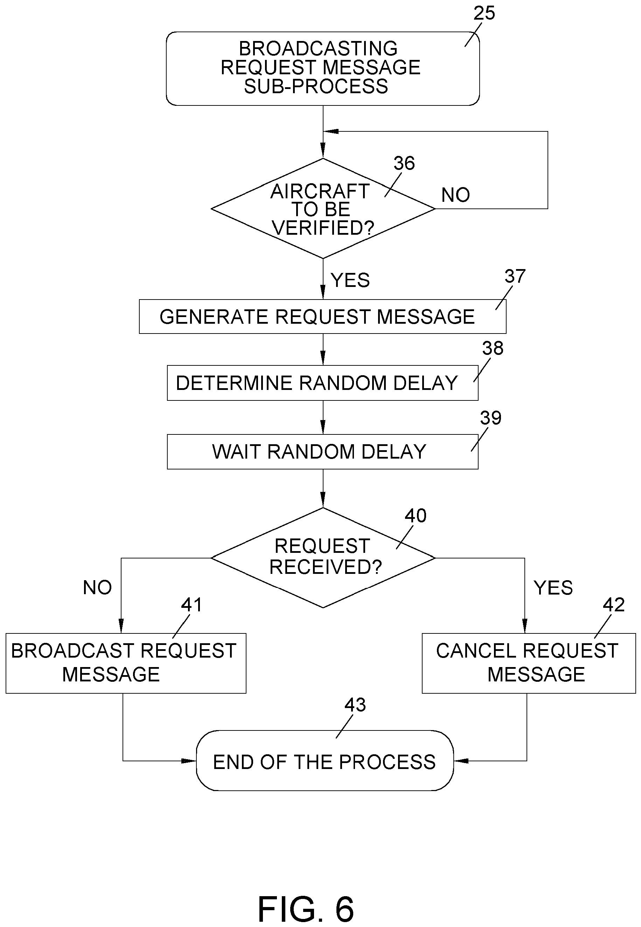

The above mentioned step of broadcasting the request message **25** is carried out by a sub-process shown in detail in FIG. 6, i.e., FIG.6 shows the flowchart diagram which represents the steps performed by the system functionalities in order to broadcast a request to the rest of the nodes of the group. The broadcasting request message **25** sub-process is described in detail as follows. First, the system continuously checks the table in order to determine if there are any nodes to be verified **36.** A node is considered verified when the position claimed by ADS-B matches the position calculated by multilateration. If a node needs to be verified, the system may need data from the surrounding aircraft (nodes) in order to perform multilateration calculations. In order to request the data needed, the system broadcasts an interrogation or request message **37.** With an interrogation, the system is requesting information of the surrounding systems of the surrounding aircraft related to a concrete TWL. For this purpose, the request message includes a TWL identifier. Before sending the generated request message, the system establishes a random delay **38.** This delay is meant to establish a stand-by period wherein the system is not required to transmit any request **39,** but rather listen to the 1030 MHz channel in order to detect any requests sent by other nodes of the group. If a request is received **40** during the Random Time Delay, the system discards the own request message **42** and the process ends **43.** If no request is received **40** during the Random Time Delay, the system broadcasts the own request message **41.** This message will be received by the rest of the nodes of the group (aircraft within the ADS-B range) and the response transmission sub-process shall be triggered. Once the request message has been broadcasted the broadcasting of request message sub-process **23** ends.

The broadcasting message sub-process **24** includes the following steps. First, the system is continuously listening to the 1030 MHz channel in order to detect any interrogations sent by other nodes **44.** When an interrogation is detected, the system broadcasts the information of its own table that may be useful for other nodes to perform calculations. In order to make efficient use of the transmission channel to a great extent, the method of the present disclosure defines a transmission procedure based on the assignment of transmission time slots. Each of the nodes determines its own transmission time slot. The system first sorts its table by the Aircraft Address (AA) **45.** The node with the lowest AA shall be considered the first in the list of nodes of the group. The time slot self-assigned by the system onboard corresponds to its own position in the list **46.** Once the system knows its transmission time slot, it generates a response message **47.** Each of the messages includes information regarding the timestamp of a single ADS-B received message. The message is transmitted during the transmission time slot determined before. The exact instant to transmit the message is determined by a random time delay **48.** The function of this random time delay is to reduce the probability of transmission collisions in case two or more nodes have chosen the same transmission time slot. The response message is only transmitted during the assigned transmission time slot **49.** It is transmitted when the random time delay is over **50.** Each system transmits a single response message per time slot. Responses are broadcasted using the 1090 MHz channel at maximum transmission power **51.** A response message includes data of a single row of the table, thus, steps 47 through **51** are repeated as many times as necessary until the information about each node in the table has been transmitted. Finally, the sub-process ends **53** when the table is completely transmitted.

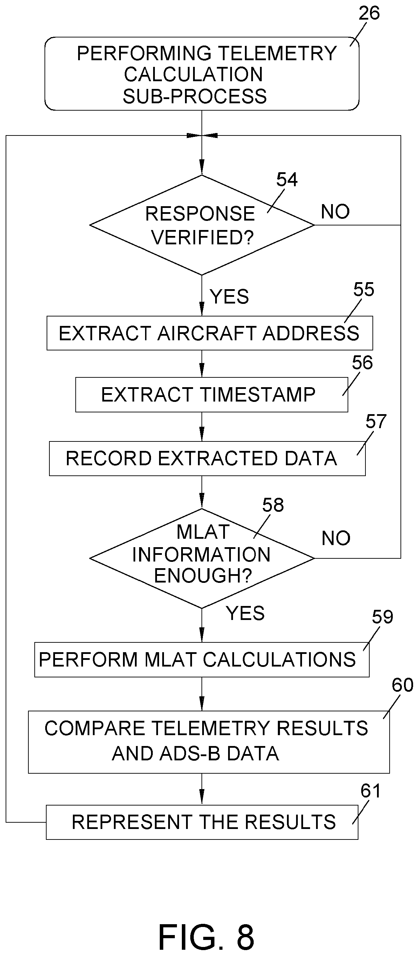

The above mentioned sub-process of performing telemetry calculations **26** in FIG. 4 is described in detail as follows. FIG. 8 shows the flowchart diagram which represents the steps performed by the disclosed system in order to perform the calculations and determine the reliability of the ADS-B data received from the nodes of the group. The telemetry (multilateration) calculation is a continuous sub-process **26.** It may be described as follows: the system is continuously listening **54** for possible responses received from other nodes of the group. When a response message is received, the system extracts the information included, i.e., the Aircraft Address **55** and Timestamp **56.** Then, the extracted data is recorded in the table **57.** The system then checks if there is enough information **58** to perform Multilateration "MLAT" calculations to verify the position of the node. If the information available is not enough to verify a node, the system continues to wait for new response messages. Steps 54 to 58 are then repeated. If there is enough information, the system performs MLAT calculations **59.** The system then compares the telemetry results with the position claimed by ADS-B messages **60** and determines if a concrete node is reliable or not. Finally, the system represents **61** the results so the flight crew is aware of the situation in real time.

**Claims**

1. A system for verifying ADS-B messages (1) for an aircraft (A) provided with Automatic Dependent Surveillance - Broadcast systems "ADS-B" (7); the system comprising:

a receiver module (2) configured to demodulate and decode signals received from a Mode S transponder (5), wherein the receiver module determines the type of message received (18, 19, 20) and then extracts and parses the information from each kind of message; the message being an ADS-B message (18), a request message (19) or a response message (20);
a processor module (3) configured to:

gather ADS-B message information extracted and parsed by the receiver module (2) for a periodic time window from other aircraft within ADS-B range; the information being at least: an aircraft ID, an aircraft position for said aircraft ID and a timestamp for each aircraft ID; and record the information into a table (13);
check if for each aircraft within ADS-B range there is at least four timestamps gathered from other aircraft; if so, the processor module (3) is further configured to perform multilateration calculations to determine the position of each aircraft and to compare the calculated position with the position of the aircraft contained within the ADS-B message, being a truthful ADS-B message if both match;
if there is not at least four timestamps gathered from other aircraft, check whether a request message from other aircraft within ADS-B range is received within a predetermined time delay; if affirmative, sort the table (13) by the aircraft ID,
determine a transmission timeslot wherein the transmission time slot corresponds to the aircraft own position in the sorted table, determine a random delay, and broadcast a response message during the transmission timeslot when the random delay is over, the response message including the ADS-B message information gathered for the periodic time window; if negative,

broadcast a request message after the predetermined time delay to each

aircraft within ADS-B range;
the system further comprising

a transmitter module (4) configured to format the request message and the response message for sending said request message and response message to the Mode S transponder (5).

2. The system of claim 1, wherein the receiver module (2) comprises: an ADS-B detector (10), a request detector (11) and a response detector (12); wherein the ADS-B detector configured to identify ADS-B messages (18); the request detector configured to identify request messages (20); and, the response detector configured to identify response messages (19).

3. The system of claim 2, wherein the processor module comprises: the table (13), a brain (14) and a clock (15); the table consisting of a memory for storing the information to be provided to the brain; the clock providing a time reference for the system (1) according to the Global Navigation Satellite System; the brain consisting of a processor configured to:

    • store in the table (13) the information contained in a ADS-B message (18) being at least: an aircraft ID (13a); an aircraft position for said aircraft ID (13b); and a timestamp for said aircraft ID (13c);
    • perform multilateration calculations (14b);
    • compare the results of the multilateration calculations with the aircraft position contained in the ADS-B message; and,
    • determine when to send the request message and the response message.

4. The system of claim 3, wherein the transmitter module comprises: a request transmitter (16) and a response transmitter (17), configured to format the request message (20) and the response message (19), respectively.

5. A method for verifying ADS-B messages for an aircraft provided with Automatic Dependent Surveillance - Broadcast systems "ADS-B", the method comprising the sub-process of:

    i) gathering (21) ADS-B message information for a periodic time window received by the aircraft from other aircraft within ADS-B range; the information being at least: an aircraft ID, an aircraft position for said aircraft ID and a timestamp for each aircraft ID; and recording (34) the information into a table (13);

    **characterized in that** the method further comprises the following sub-processes:

    ii) checking (22) if for each aircraft within ADS-B range there is at least four timestamps gathered from other aircraft;

    a) for a positive case, perform (26) multilateration calculations to determine the position of each aircraft and compare the calculated position with the aircraft position within the ADS-B message so that the ADS-B message received is truthful (26T) if both match or untruthful (26U) if not;
    b) for a negative case: continue;

    iii) checking (23) whether a request message from other aircraft within ADS-B range is received within a predetermined time delay;

    a) for an affirmative case: sorting (45) the table (13) by the aircraft ID, determining a transmission timeslot (46) wherein the transmission time slot corresponds to the aircraft own position in the sorted table, determining a random delay (48), and broadcasting a response message (24) during the transmission timeslot when the random delay is over, the response message including the ADS-B message information gathered for the periodic time window;
    b) for a negative case: continue;

    iv) broadcasting (25) a request message after the predetermined time delay to each aircraft within ADS-B range; and repeating sub-process i) to iii);

6. The method of claim 5, wherein the sub-process of gathering ADS-B message information further comprises:

    processing ADS-B messages received during the periodic time window (27);
    incrementing the value of the time window counter (28);
    starting timestamp counter (29);
    determining the timestamp (31) when an ADS-B message is received (30);
    extracting both the aircraft address (32) and the ADS-B position (33) claimed;
    recording (34) the aircraft address and the ADS-B position claimed into the table;
    continue listening for and processing (35) the received ADS-B messages if the periodic time window is still open; otherwise,
    stopping (35) processing ADS-B messages until the next periodic time window.

7. The method of claim 5, wherein the sub-process of broadcasting a request message (25) further comprises:

    checking the table in order to determine if there are any nodes to be verified (36);

generating a request message (37);

determining a random time delay (38);

waiting the random time delay (39);

if a request is received (40) during the Random Time Delay, the system discards the own request message (42) and the sub-process ends (43);

if no request is received (40) during the Random Time Delay, the own request message is broadcasted (41) and the sub-process ends.

8. The method of claim 5, wherein the sub-process of broadcasting a response message (24) further comprises:

   i) continuously listening (44) to detect any requests sent by other nodes;

   ii) sorting (45) its own table by the aircraft address;

   iii) self-assignment (46) of a transmission time slot;

   iv) generating (47) a response message;

   v) determining (48) a random time delay;

   vi) checking (49) whether the time slot expired;

   vii) waiting (50) for the expiration of the random time delay;

   viii) broadcasting (51) the response message including data of a single row of the table;

   ix) repeating (52) steps iv) through viii) as many times as necessary until the information about each node in the table has been transmitted; and,

   x) ending (53) the sub-process when the table is completely transmitted.

9. The method of claim 5, wherein the sub-process of performing multilateration calculation (26) further comprises:

   i) continuously listening (54) for possible responses received from other nodes of the group;

   ii) extracting at least the aircraft address (55) and the timestamp (56) when a response message is received;

   iii) recording (57) extracted aircraft address and timestamp in the table;

   checking (58) if there is enough information to perform Multilateration "MLAT" calculations to verify the position of the node; wherein if the information available is not enough to verify a node, the system continues to wait for new response messages, then repeats steps i) to iv); and f there is enough information, performs (59) MLAT calculations;

   iv) comparing (60) the multilateration results with the position claimed by ADS-B messages and determining if the aircraft is reliable or not; and,

v) representing (61) the results so the flight crew is aware of the situation in real time.

10. A computer readable medium having stored therein a computer program that when loaded onto an aircraft (A), configures the Automatic Dependent Surveillance - Broadcast systems "ADS-B" so that the ADS-B system (7) is able to further verify ADS-B messages (18) according to any of claims 5 to 9.

11. An aircraft (A) comprising the system (1) for verifying ADS-B messages (18) received from aircraft (B, C, D, E) within its ADS-B range according to any of claims 1 to 4.

**Patentansprüche**

1. System zur Verifizierung von ADS-B-Nachrichten (1) für ein Flugzeug (A), das mit Automatic Dependent Surveillance - Broadcast Systemen ("ADS-B"-Systemen) (7) ausgestattet ist; wobei das System Folgendes umfasst:

   ein Empfängermodul (2), das dazu ausgelegt ist, von einem Mode-S-Transponder (5) empfangene Signale zu demodulieren und zu decodieren, wobei das Empfängermodul die Art der empfangenen Nachricht (18, 19, 20) bestimmt und dann aus der jeweiligen Art von Nachricht Informationen extrahiert und analysiert; wobei die Nachricht eine ADS-B-Nachricht (18), eine Anfragenachricht (19) oder eine Antwortnachricht (20) ist;

   ein Prozessormodul (3), ausgelegt zum:

      Sammeln von durch das Empfängermodul (2) extrahierten und analysierten ADS-B-Nachrichteninformationen von anderen Flugzeugen in ADS-B-Reichweite in einem periodischen Zeitfenster; wobei die Informationen mindestens eine Flugzeugkennung, eine Flugzeugposition für die genannte Flugzeugkennung und einen Zeitstempel für jede Flugzeugkennung umfassen, sowie Erfassen der Informationen in einer Tabelle (13);

      Prüfen, ob zu jedem Flugzeug in ADS-B-Reichweite mindestens vier von anderen Flugzeugen gesammelte Zeitstempel vorliegen; in diesem Fall ist das Prozessormodul (3) ferner zur Durchführung von Multilaterationsberechnungen zwecks Bestimmung der Position der einzelnen Flugzeuge und Vergleich der berechneten Position mit der Position des in der ADS-B-Nachricht enthaltenen Flugzeugs ausgelegt, wobei es sich bei einer Übereinstimmung der beiden um eine wahrheitsgemäße ADS-B-Nachricht handelt;

wenn nicht mindestens vier von anderen Flugzeugen gesammelte Zeitstempel vorliegen, Prüfen, ob innerhalb einer vorgegebenen Zeitverzögerung eine Anfragenachricht von anderen Flugzeugen in ADS-B-Reichweite empfangen wird; wenn ja, Ordnen der Tabelle (13) nach Flugzeugkennung, Bestimmen eines Übertragungszeitschlitzes, wobei der Übertragungszeitschlitz der Eigenposition des Flugzeugs in der geordneten Tabelle entspricht, Bestimmen einer willkürlichen Zeitverzögerung und Aussenden einer Anfragenachricht innerhalb des Übertragungszeitschlitzes nach Ablauf der willkürlichen Zeitverzögerung, wobei die Antwortnachricht die für das periodische Zeitfenster gesammelten ADS-B-Nachrichteninformationen enthält; wenn nein, Aussenden einer Anfragenachricht an alle Flugzeuge innerhalb ADS-B-Reichweite nach der vorgegebenen Zeitverzögerung;

wobei das System ferner ein Sendermodul (4) umfasst, das dazu ausgelegt ist, die Anfragenachricht und die Antwortnachricht zwecks Sendens der genannten Anfragenachricht und Antwortnachricht an den Mode-S-Transponder (5) zu formatieren.

**2.** System nach Anspruch 1, wobei das Empfängermodul (2) Folgendes umfasst: einen ADS-B-Detektor (10), einen Anfragedetektor (11) und einen Antwortdetektor (12); wobei der ADS-B-Detektor zum Erkennen von ADS-B-Nachrichten (18) ausgelegt ist; der Anfragedetektor zum Erkennen von Anfragenachrichten (20) ausgelegt ist; und der Antwortdetektor zum Erkennen von Antwortnachrichten (19) ausgelegt ist.

**3.** System nach Anspruch 2, wobei das Prozessormodul Folgendes umfasst:

die Tabelle (13), ein Gehirnelement (14) und eine Uhr (15); wobei die Tabelle aus einem Speicher zum Speichern der dem Gehirnelement bereitzustellenden Informationen besteht; wobei die Uhr dem System (1) als Zeitreferenz in Übereinstimmung mit dem Globalen Navigationssatellitensystem dient; wobei das Gehirnelement aus einem Prozessor besteht, der dazu ausgelegt ist:

• die in einer ADS-B-Nachricht (18) enthaltenen Informationen in der Tabelle (13) zu speichern, wobei es sich mindestens um eine Flugzeugkennung (13a), eine Flugzeugposition für die genannte Flugzeugkennung (13b) und einen Zeitstempel für die genannte Flugzeugkennung (13c) handelt;
• Multilaterationsberechnungen (14b) durchzuführen;
• die Ergebnisse der Multilaterationsberechnungen mit der in der ADS-B-Nachricht enthaltenen Flugzeugposition zu vergleichen; und
• zu bestimmen, wann Anfragenachricht und Antwortnachricht zu senden sind.

**4.** System nach Anspruch 3, wobei das Sendermodul einen Anfragesender (16) und einen Antwortsender (17) umfasst, die zum Formatieren der Anfragenachricht (20) bzw. der Antwortnachricht (19) ausgelegt sind.

**5.** Verfahren zur Verifizierung von ADS-B-Nachrichten für ein Flugzeug, das mit Automatic Dependent Surveillance - Broadcast Systemen (ADS-B) ausgestattet ist, wobei das Verfahren die folgenden Teilprozesse umfasst:

i) Sammeln (21) von dem Flugzeug von anderen Flugzeugen in ADS-B-Reichweite zugegangenen Informationen in einem periodischen Zeitfenster; wobei die Informationen mindestens eine Flugzeugkennung, eine Flugzeugposition für die genannte Flugzeugkennung und einen Zeitstempel für jede Flugzeugkennung umfassen, sowie Erfassen (34) der Informationen in einer Tabelle (13);

**dadurch gekennzeichnet, dass** das Verfahren ferner die folgenden Teilprozesse umfasst:

ii) Prüfen (22), ob zu jedem Flugzeug in ADS-B-Reichweite mindestens vier von anderen Flugzeugen gesammelte Zeitstempel vorliegen;

a) falls ja: Durchführung (26) von Multilaterationsberechnungen zwecks Bestimmung der Position der einzelnen Flugzeuge und Vergleich der berechneten Position mit der Flugzeugposition aus der ADS-B-Nachricht, wobei die empfangene ADS-B-Nachricht bei Übereinstimmung der beiden wahrheitsgemäß (26T), bei Nichtübereinstimmung nicht wahrheitsgemäß (26U) ist;
b) falls nein: Fortfahren;

iii) Prüfen (23), ob innerhalb einer vorgegebenen Zeitverzögerung eine Anfragenachricht von anderen Flugzeugen in ADS-B-Reichweite empfangen wird;

a) falls ja: Ordnen (45) der Tabelle (13) nach Flugzeugkennung, Bestimmen eines Übertragungszeitschlitzes (46), wobei der Übertragungszeitschlitz der Eigenposition des Flugzeugs in der geordneten Tabelle entspricht, Bestimmen einer willkürlichen Zeitverzögerung (48) und Aussenden einer Antwortnachricht (24) innerhalb des Übertragungszeitschlitzes nach Ablauf der willkürlichen Zeitverzögerung, wobei die Antwortnachricht die für das periodische Zeitfenster gesammelten ADS-B-Nachrichteninformationen enthält;
b) falls nein: Fortfahren;

iv) Aussenden (25) einer Anfragenachricht an alle Flugzeuge innerhalb ADS-B-Reichweite nach der vorgegebenen Zeitverzögerung und Wiederholen der Teilprozesse i) bis iii);

6. Verfahren nach Anspruch 5, wobei der Teilprozess des Sammelns von ADS-B-Nachrichteninformationen ferner Folgendes umfasst:

Verarbeiten von innerhalb des periodischen Zeitfensters (27) empfangenen ADS-B-Nachrichten;
Hochsetzen des Zeitfensterzählers (28);
Starten des Zeitstempelzählers (29);
Bestimmen des Zeitstempels (31) bei Erhalt einer ADS-B-Nachricht (30);
Extrahieren der angegebenen Flugzeugadresse (32) und ADS-B-Position (33);
Erfassen (34) der angegebenen Flugzeugadresse und ADS-B-Position in der Tabelle;
bei weiterhin geöffnetem periodischen Zeitfenster Fortfahren von Abhören und Verarbeiten (35) der empfangenen ADS-B-Nachrichten; andernfalls
Einstellen (35) der Verarbeitung von ADS-B-Nachrichten bis zum nächsten periodischen Zeitfenster.

7. Verfahren nach Anspruch 5, wobei der Teilprozess des Aussendens einer Anfragenachricht (25) ferner Folgendes umfasst:

Prüfen der Tabelle auf eventuell vorhandene zu verifizierende Knoten (36);
Erstellen einer Anfragenachricht (37);
Bestimmen einer willkürlichen Zeitverzögerung (38);
Abwarten der willkürlichen Zeitverzögerung (39);
bei Empfang einer Anfrage (40) während der willkürlichen Zeitverzögerung verwirft das System die eigene Anfragenachricht (42) und der Teilprozess endet (43);
erfolgt während der willkürlichen Zeitverzögerung kein Empfang einer Anfrage (40), wird die eigene Anfragenachricht ausgesendet (41) und der Teilprozess beendet.

8. Verfahren nach Anspruch 5, wobei der Teilprozess des Aussendens einer Antwortnachricht (24) ferner Folgendes umfasst:

i) kontinuierliches Abhören (44) zur Erfassung aller von anderen Knoten gesendeten Anfragen;
ii) Ordnen (45) der eigenen Tabelle nach Flugzeugadresse;
iii) Selbstzuweisung (46) eines Übertragungszeitschlitzes;
iv) Erstellen (47) einer Antwortnachricht;
v) Bestimmen (48) einer willkürlichen Zeitverzögerung;
vi) Prüfen (49), ob der Zeitschlitz abgelaufen ist;
vii) Warten (50) auf das Ablaufen der willkürlichen Zeitverzögerung;
viii) Aussenden (51) der Antwortnachricht mit den Daten einer einzelnen Tabellenzeile;
ix) Wiederholen (52) der Schritte iv) bis viii) beliebig oft, bis die Informationen aller Knoten in der Tabelle übertragen wurden; und
x) Beenden (53) des Teilprozesses nach vollständiger Übertragung der Tabelle.

9. Verfahren nach Anspruch 5, wobei der Teilprozess des Durchführens von Multilaterationsberechnungen (26) ferner umfasst:

i) kontinuierliches Abhören (54) auf mögliche von anderen Knoten der Gruppe eingegangenen Antworten;
ii) bei Empfang einer Antwortnachricht Extrahieren von mindestens Flugzeugadresse (55) und Zeitstempel (56);
iii) Erfassen (57) der extrahierten Flugzeugadresse und des extrahierten Zeitstempels in der Tabelle;
Prüfen (58), ob genügend Informationen zur Durchführung von Multilaterationsberechnungen ("MLAT"-Berechnungen) zur Verifizierung der Knotenposition vorliegen; wobei das System, wenn die verfügbaren Informationen zur Verifizierung eines Knotens nicht ausreichen, weiterhin auf neue Antwortnachrichten wartet und dann die Schritte i) bis iv) wiederholt; und bei Vorliegen von genügend Informationen MLAT-Berechnungen durchführt (59);
iv) Vergleichen (60) der Multilaterationsergebnisse mit der durch ADS-B-Nachrichten angegebenen Position und Bestimmen, ob das Flugzeug glaubwürdig ist oder nicht; und
v) Anzeigen (61) der Ergebnisse, damit die Flugbesatzung in Echtzeit über die Situation informiert ist.

10. Computerlesbares Medium mit einem darin gespeicherten Computerprogramm, das, wenn es in ein Flugzeug (A) geladen wird, die Automatic Dependent Surveillance - Broadcast Systeme ("ADS-B"-Systeme) so konfiguriert, dass das ADS-B-System (7) zur genaueren Verifizierung von ADS-B-Nachrichten (18) nach einem der Ansprüche 5 bis 9 in der Lage ist.

11. Flugzeug (A) mit dem System (1) zur Verifizierung von ADS-B-Nachrichten (18), die von Flugzeugen (B, C, D, E) innerhalb seiner ADS-B-Reichweite empfangen werden, nach einem der Ansprüche 1 bis 4.

## Revendications

1. Système pour vérifier des messages ADS-B (1) pour un aéronef (A) muni de systèmes de surveillance dépendante automatique — diffusion "ADS-B" (7) ; le système comprenant :

un module récepteur (2) configuré pour démoduler et décoder les signaux reçus d'un transpondeur Mode S (5), dans lequel le module récepteur détermine le type de message reçu (18, 19, 20) puis extrait et analyse les informations de chaque type de message ; le message étant un message ADS-B (18), un message de demande (19) ou un message de réponse (20) ; un module processeur (3) configuré pour :

rassembler des informations de message ADS-B extraites et analysées par le module récepteur (2) pour une fenêtre temporelle périodique à partir d'autres aéronefs à portée ADS-B ; les informations étant au moins : un ID d'aéronef, une position d'aéronef pour ledit ID d'aéronef et un horodatage pour chaque ID d'aéronef ; et enregistrer les informations dans une table (13) ; vérifier si, pour chaque aéronef à l'intérieur de la portée ADS-B, il y a au moins quatre horodatages recueillis à partir d'autres aéronefs ; si c'est le cas, le module processeur (3) est en outre configuré pour effectuer des calculs de multilatération pour déterminer la position de chaque aéronef et pour comparer la position calculée avec la position de l'aéronef contenue dans le message ADS-B, étant un message ADS-B véridique si les deux correspondent ; s'il n'y a pas au moins quatre horodatages recueillis auprès d'autres aéronefs, vérifier si un message de demande provenant d'autres aéronefs à portée ADS-B est reçu dans un délai prédéterminé ; dans l'affirmative, trier la table (13) par l'ID de l'aéronef, déterminer une tranche de temps de transmission dans laquelle la tranche de temps de transmission correspond à la position propre de l'aéronef dans la table triée, déterminer un retard aléatoire, et diffuser un message de réponse pendant la tranche de temps de transmission lorsque le retard aléatoire est terminé, le message de réponse comprenant les informations de message ADS-B recueillies pour la fenêtre de temps périodique ; dans la négative, diffuser un message de demande après le retard prédéterminé à chaque aéronef à portée ADS-B ;

le système comprend en outre un module émetteur (4) configuré pour formater le message de demande et le message de réponse pour envoyer ledit message de demande et ledit message de réponse au transpondeur Mode S (5).

2. Système de la revendication 1, dans lequel le module récepteur (2) comprend : un détecteur ADS-B (10), un détecteur de demande (11) et un détecteur de réponse (12) ; dans lequel le détecteur ADS-B est configuré pour identifier les messages ADS-B (18) ; le détecteur de demande est configuré pour identifier les messages de demande (20) ; et le détecteur de réponse est configuré pour identifier les messages de réponse (19).

3. Système de la revendication 2, dans lequel le module processeur comprend : la table (13), un cerveau (14) et une horloge (15) ; la table consistant en une mémoire pour stocker les informations à fournir au cerveau ; l'horloge fournissant une référence temporelle pour le système (1) selon le Système Global de Navigation par Satellite ; le cerveau consistant en un processeur configuré pour :

• stocker dans la table (13) les informations contenues dans un message ADS-B (18) étant au moins : un identifiant d'avion (13a) ; une position d'avion pour ledit identifiant d'avion (13b) ; et un horodatage pour ledit identifiant d'avion (13c) ; • effectuer des calculs de multilatération (14b) ; • comparer les résultats des calculs de multilatération avec la position de l'aéronef contenue dans le message ADS-B ; et, • déterminer quand envoyer le message de demande et le message de réponse.

4. Le système de la revendication 3, dans lequel le module émetteur comprend : un émetteur de demande (16) et un émetteur de réponse (17), configurés pour formater le message de demande (20) et le message de réponse (19), respectivement.

5. Procédé de vérification de messages ADS-B pour un aéronef équipé de systèmes de surveillance dépendante automatique — diffusion "ADS-B", le procédé comprenant le sous-processus consistant à :

i) rassembler (21) des informations de messages ADS-B pour une fenêtre temporelle périodique reçues par l'aéronef à partir d'autres aéronefs dans la portée ADS-B ; les informations étant au moins : un ID d'aéronef, une position d'aéronef pour ledit ID d'aéronef et un horodatage pour chaque ID d'aéronef ; et enregistrer (34) les informations dans une table (13) ;

**caractérisée en ce que** le procédé comprend en outre les sous-processus suivants :

ii) vérifier (22) si, pour chaque aéronef se trouvant dans la portée ADS-B, il existe au moins quatre horodatages recueillis auprès d'autres aéronefs ;

a) pour un cas positif, effectuer (26) des calculs de multilatération pour déterminer la position de chaque aéronef et comparer la position calculée avec la position de l'aéronef dans le message ADS-B de sorte que le message ADS-B reçu est véridique (26T) si les deux correspondent ou non véridique (26U) sinon ;
b) pour un cas négatif : continuer ;

iii) vérifier (23) si un message de demande provenant d'un autre aéronef se trouvant à portée ADS-B est reçu dans un délai prédéterminé ;

a) pour un cas affirmatif : trier (45) la table (13) par l'ID de l'aéronef, déterminer une tranche de temps de transmission (46) dans laquelle la tranche de temps de transmission correspond à la position propre de l'aéronef dans la table triée, déterminer un retard aléatoire (48), et diffuser un message de réponse (24) pendant la tranche de temps de transmission lorsque le retard aléatoire est terminé, le message de réponse comprenant les informations de message ADS-B recueillies pour la fenêtre de temps périodique ;
b) pour un cas négatif : continuer ;

iv) diffuser (25) un message de demande après le délai prédéterminé à chaque aéronef dans la portée ADS-B ; et répéter les sous-processus i) à iii) ;

6. Procédé de la revendication 5, dans lequel le sous-processus de collecte d'informations de messages ADS-B comprend en outre :

le traitement des messages ADS-B reçus pendant la fenêtre temporelle périodique (27) ;
l'incrémentation de la valeur du compteur de fenêtre temporelle (28) ;
le démarrage du compteur d'horodatage (29) ;
la détermination de l'horodatage (31) lorsqu'un message ADS-B est reçu (30) ;
l'extraction de l'adresse de l'aéronef (32) et de la position ADS-B (33) revendiquées ;
l'enregistrement de (34) l'adresse de l'aéronef et la position ADS-B revendiquée dans le tableau;
continuer à écouter et à traiter (35) les messages ADS-B reçus si la fenêtre temporelle périodique est encore ouverte ; sinon,
arrêter (35) le traitement des messages ADS-B jusqu'à la prochaine fenêtre temporelle périodique.

7. Procédé de la revendication 5, dans lequel le sous-processus de diffusion d'un message de demande (25) comprend en outre :

la vérification de la table afin de déterminer s'il y a des nœuds à vérifier (36) ;
la génération d'un message de demande (37) ;
déterminer un délai aléatoire (38) ;
attendre le délai aléatoire (39) ;
si une demande est reçue (40) pendant le délai de temps aléatoire, le système rejette le message de demande propre (42) et le sous-processus se termine (43) ;
si aucune demande n'est reçue (40) pendant le délai aléatoire, le message de demande propre est diffusé (41) et le sous-processus se termine.

8. Procédé de la revendication 5, dans lequel le sous-processus de diffusion d'un message de réponse (24) comprend en outre :

i) l'écoute continue (44) pour détecter toute demande envoyée par d'autres nœuds ;
ii) le tri (45) de sa propre table par l'adresse de l'appareil ;
iii) l'auto-affectation (46) d'un créneau temporel de transmission ;
iv) la génération (47) d'un message de réponse ;
v) la détermination (48) d'un délai aléatoire ;
vi) vérifier (49) si le créneau horaire a expiré ;
vii) attendre (50) l'expiration du délai aléatoire ;
viii) diffuser (51) le message de réponse comprenant les données d'une seule ligne de la table ;
ix) répéter (52) les étapes iv) à viii) autant de fois que nécessaire jusqu'à ce que les informations sur chaque nœud de la table aient été transmises ; et,
x) terminer (53) le sous-processus lorsque la table est complètement transmise.

9. Procédé de la revendication 5, dans lequel le sous-processus d'exécution du calcul de multilatération (26) comprend en outre :

> i) l'écoute continue (54) des réponses possibles reçues d'autres nœuds du groupe ;
> ii) extraire au moins l'adresse de l'aéronef (55) et l'horodatage (56) lorsqu'un message de réponse est reçu ;
> iii) enregistrer (57) l'adresse de l'avion et l'horodatage extraits dans la table ;
> iv) vérifier (58) s'il y a suffisamment d'informations pour effectuer des calculs de multilatération "MLAT" afin de vérifier la position du noeud ; dans lequel si les informations disponibles ne sont pas suffisantes pour vérifier un nœud, le système continue d'attendre de nouveaux messages de réponse, puis répète les étapes i) à iv) ; et s'il y a suffisamment d'informations, effectuer (59) des calculs MLAT ;
> iv) comparer (60) les résultats de la multilatération avec la position revendiquée par les messages ADS-B et déterminer si l'aéronef est fiable ou non ; et,
> v) représenter (61) les résultats afin que l'équipage de conduite soit informé de la situation en temps réel.

10. Support lisible par ordinateur dans lequel est stocké un programme informatique qui, lorsqu'il est chargé sur un aéronef (A), configure les systèmes de surveillance dépendante automatique — diffusion "ADS-B" de sorte que le système ADS-B (7) est capable de vérifier davantage les messages ADS-B (18) selon l'une quelconque des revendications 5 à 9.

11. Aéronef (A) comprenant le système (1) pour vérifier les messages ADS-B (18) reçus d'aéronefs (B, C, D, E) dans sa portée ADS-B selon l'une quelconque des revendications 1 à 4.

FIG. 1

FIG. 2

EP 3 154 046 B1

| AIRCRAFT ID | ADS-B POSITION | TIME STAMP | VERIFIED |
|---|---|---|---|
| | | $TW_n$ - AIRCRAFT A | |
| $Id_B$ | $(X_B, Y_B, Z_B)$ | $TS_A^B$ $TS_C^B$ $TS_D^B$ $TS_E^B$ | YES TRUTHFUL ✓ |
| $Id_C$ | $(X_C, Y_C, Z_C)$ | $TS_A^C$ $TS_B^C$ $TS_D^C$ $TS_E^C$ | YES TRUTHFUL ✓ |
| $Id_D$ | $(X_D, Y_D, Z_D)$ | $TS_A^D$ $TS_B^D$ | NO ? |
| $Id_E$ | $(X_E, Y_E, Z_E)$ | $TS_A^E$ $TS_B^E$ $TS_C^E$ $TS_D^E$ | YES UNTRUTHFUL ✓ |

13a · 13b · 13c · 13 · 13d

FIG. 3

INCOMING MESSAGES

ADS-B
GATHERING MESSAGE
INFORMATION — 21

FOUR TIME-
STAMPS FOR EACH
AIRCRAFT ? — 22

YES

NO

REQUESTING MESSAGE
RECEIVED FROM
OTHERS AIRCRAFT
? — 23

YES

BROADCASTING
A RESPONSE
MESSAGE — 24

NO

BROADCASTING A
REQUEST MESSAGE — 25

PERFORMING TELEMETRY
CALCULATIONS — 26

ADS-B MESSAGE
TRUTHFUL — 26T

ADS-B MESSAGE
UNTRUTHFUL — 26U

FIG. 4

```
                    ┌─────────────────────────┐  21
                    │         ADS-B           │
                    │  MESSAGE GATHERING      │
                    │ INFORMATION SUB-PROCESS │
                    └─────────────────────────┘
                                │
                            ◇ 27
                         TIME            NO
                        WINDOW  ───────────►
                        OPEN ?
                            │ YES
                    ┌─────────────────────────┐  28
                    │ INCREASE TIME WINDOW COUNTER │
                    └─────────────────────────┘
                            │                     29
                    ┌─────────────────────────┐
                    │ START TIMESTAMP COUNTER │
                    └─────────────────────────┘
                            │
                         ◇ 30
                        ADS-B           NO
                      MESSAGE  ───────────►
                      RECEIVED?
                            │ YES
                    ┌─────────────────────────┐  31
                    │   DETERMINE TIMESTAMP   │
                    └─────────────────────────┘
                            │                     32
                    ┌─────────────────────────┐
                    │ EXTRACT AIRCRAFT ADDRESS │
                    └─────────────────────────┘
                            │                     33
                    ┌─────────────────────────┐
                    │  EXTRACT ADS-B POSITION │
                    └─────────────────────────┘
                            │                     34
                    ┌─────────────────────────┐
                    │ RECORD DATA INTO AMLAT TABLE │
                    └─────────────────────────┘
                            │
                         ◇ 35
              YES        TIME           NO
          ◄─────────  WINDOW STILL  ───────►
                        OPEN?
```

## FIG. 5

FIG. 6

FIG. 7

26

PERFORMING TELEMETRY
CALCULATION
SUB-PROCESS

54

RESPONSE
VERIFIED? —→ NO

YES

55

EXTRACT AIRCRAFT ADDRESS

56

EXTRACT TIMESTAMP

57

RECORD EXTRACTED DATA

58

MLAT
INFORMATION —→ NO
ENOUGH?

YES

59

PERFORM MLAT CALCULATIONS

60

COMPARE TELEMETRY RESULTS
AND ADS-B DATA

61

REPRESENT THE RESULTS

FIG. 8

**EP 3 154 046 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20120041620 A1
- US 2011057830 A